# EUROPÄISCHE PATENTANMELDUNG

(11) **EP 1 790 852 A1**
(43) Veröffentlichungstag der Anmeldung: **30.05.2007**
(21) Anmeldenummer: 06024267.4
(22) Anmeldetag: 23.11.2006
(51) Int. Cl.: F03D 11/04, F03D 1/04

(54) **Schwenklagerung, insbesondere für Windkraftanlagen**

(30) Priorität: 25.11.2005 DE 202005018572 U
(71) Anmelder: Lüthi-Poos, Eva, 8272 Ermatingen (CH)
(72) Erfinder: Herzog, Hartmut, 77761 Schiltach (DE)
(74) Vertreter: Neymeyer, Franz

(57) **Zusammenfassung**

Die Erfindung betrifft eine Vorrichtung zur drehbaren Lagerung eines Windkraftgenerators einer Windkraftanlage, welcher auf einer Stützvorrichtung (7) drehbar gelagert ist. Um eine direkte Leitungsführung vom Generator zur Netzeinspeisung zu ermöglichen und eine Drehbarkeit der Windkraftgenerator um zumindest 360° in jede Drehrichtung zu gewährleisten, ist erfindungsgemäß vorgesehen, dass der Windkraftgenerator mit einem Sperrglied (40) gekoppelt ist, welches sich während der Drehbewegung des Windkraftgenerators auf einer Kreisbahn bewegt und, dass die Stützvorrichtung (7) mit einem Anschlagelement (31) gekoppelt ist, das im Bereich der Kreisbahn des Sperrgliedes (40) angeordnet ist und als Drehbegrenzung für das Sperrglied (40) dient und, dass das Anschlagelement (31) und/oder das Sperrglied (40) derart nachgiebig mit dem Windkraftgenerator (1) einerseits oder der Stützvorrichtung (7) andererseits gekoppelt ist bzw. sind, dass der Windkraftgenerator aus einer Mittelstellung um wenigstens 180° in beide möglichen Drehrichtungen drehbar ist.

## Beschreibung

Die Erfindung betrifft eine Vorrichtung zur drehbaren Lagerung eines Windkraftgenerators einer Windkraftanlage, der einen mit Rotorblättern versehenen, durch einen Luftstrom um eine Rotorachse drehend antreibbaren Rotor aufweist, durch welchen ein Generator rotierend antreibbar ist, wobei der Windkraftgenerator auf einer Stützvorrichtung drehbar gelagert ist.

Windkraftgeneratoren, welche auch als Windkraftturbinen bezeichnet werden, sind schon seit Jahrzehnten bekannt und werden in sogenannte "freifahrende" Windkraftturbinen und in sogenannte "Mantelturbinen" unterschieden. Windkraftgeneratoren der gattungsgemäßen Art sind beispielsweise aus der DE 101 45 785.5 bekannt. Solche als Mantelturbinen ausgebildete Windkraftgeneratoren bestehen im Wesentlichen aus einem Rotor, welcher mit zwei oder mehreren Rotorblättern versehen ist. Durch diesen Rotor wird zur elektrischen Energieerzeugung ein elektrischer Generator rotierend angetrieben, wobei die Rotorblätter zur Verbesserung des Wirkungsgrades von einem umlaufenden Mantelgehäuse umgeben sind. Im normalen Betriebszustand sind dabei die Rotorblätter des Rotors in ihrer axialen Position relativ zum Mantelgehäuse im Bereich der größten Strömungsgeschwindigkeit angeordnet, welche etwa dem Bereich des engsten Durchtrittsquerschnittes des Mantelgehäuses entspricht. In der Regel werden solche Windkraftgeneratoren in großer Höhe auf einem Stützmasten positioniert, wo sie drehbar gelagert sind. Eine solche Vorrichtung zur drehbaren Lagerung des Windkraftgenerators ermöglicht eine Rotation des Windkraftgenerators um eine vertikale Achse, also quer zur Rotationsachse des Rotors, so dass dieser sich zur möglichst optimalen Anströmung des Luftstroms auf die gerade herrschende Windrichtung einstellt. Dabei sind Systeme bekannt, bei welchen die Drehung des Windkraftgenerators durch einen separaten Antrieb und eine elektronische Steuereinrichtung erfolgt.

Da diese aktive Variante der Einstellung des Rotors auf die Windrichtung aufwändig und kostenintensiv ist, werden auch antriebslose Vorrichtungen zur Lagerung des Windkraftgenerators eingesetzt. Bei diesen Varianten wird der Windkraftgenerator durch die Luftströmung des Windes automatisch auf die Windrichtung ausgerichtet. Dazu kann der Windkraftgenerator mit entsprechenden Luftleitwerken versehen sein.

Da bei einem solchen Windkraftgenerator der Energie erzeugende Generator in einem Gehäuse innerhalb des Mantelgehäuses angeordnet ist, dreht sich der Generator bei einer entsprechenden Ausrichtung des gesamten Windkraftgenerators in die entsprechend vorherrschende Windrichtung zusammen mit dem Windkraftgenerator mit. Dies macht es wiederum erforderlich, spezielle Vorkehrungen zu treffen, um die erzeugte Energie durch den ortsfesten, sich nicht mitdrehenden Stützmasten zu einer Trafostation oder einem Umwandler zu führen, von wo aus die Energie dem elektrischen Versorgungsnetz zugeführt wird.

Um zu vermeiden, dass die hierzu verwendeten elektrischen Versorgungsleitungen bei mehrfacher Drehung des Rotors in eine Drehrichtung um mehr als 360° beschädigt werden können, ist es bekannt, zu dieser Energieübertragung mehrere Schleifringe und Schleifkontakte zu verwenden, um die vom Generator erzeugte elektrische Energie abführen zu können. Solche Schleifringe und Schleifkontakte haben jedoch den Nachteil, dass diese nicht verlustfrei die Energie weiterleiten können. Weiter sind solche Schleifringe und Schleifkontakte nicht frei von Verschleiß, so dass hier stets Wartungsarbeiten anfallen.

Beim Gegenstand der DE 101 45 785.5 lässt jedoch die Vorrichtung zur drehenden Lagerung kaum eine andere Alternative als die Verwendung von Schleifringen in Verbindung mit Schleifkontakten. Beim Gegenstand der genannten Druckschrift führt von der Aufnahmevorrichtung des Generators ein Stützrohr vertikal nach unten und durchragt das eigentliche Mantelgehäuse. Das Mantelgehäuse ist wiederum mit einem zylindrisch ausgebildeten Stützkörper versehen, über welchen das Mantelgehäuse mit dem Stützrohr drehfest verbunden ist. Das Stützrohr ist seinerseits wiederum unterseitig mit einem radial nach außen vorstehenden Montageflansch versehen, welcher wiederum mit einem Montageflansch des Stützkörpers koppelbar ist. Unterhalb des Montageflansches des Stützrohres ist ein äußerer Lagerring vorgesehen, welcher zusammen mit einer inneren Lagerplatte die eigentliche Schwenklagerung des bekannten Windkraftgenerators bildet.

Aufgrund dieser Ausgestaltung ist der gesamte Windkraftgenerator mit seinem die elektrische Energie erzeugenden Generator, beliebig um weit über 360° drehbar, so dass aufgrund der Ausgestaltung dieser Vorrichtung zur Lagerung des Windkraftgenerators die oben bereits erwähnten Schleifringe und Schleifkontakte vorzusehen sind, um die Energie weiterleiten zu können. Würde man hier vom Generator durch das Stützrohr hindurch geführte Versorgungsleitungen verwenden, so würde dies bei einer mehrfachen Drehung des Windkraftgenerators in einer Richtung um ein Mehrfaches von 360° zu einer Drehsperrung des Generators durch die Versorgungsleitungen führen, wobei diese sich dabei zusammendrehen würden. Damit ist allerdings auch eine Zerstörung der Versorgungsleitung nicht ausgeschlossen, so dass eben die genannten Schleifkontakte und Schleifringe zu verwenden sind. Würde man die Versorgungsleitungen direkt durch das Stützrohr zur Netzeinspeisung führen, so würden auch hier stets Wartungsarbeiten entstehen, da der Windkraftgenerator nach längerem Betrieb stets wieder in eine neutrale Ausgangsposition zurückzudrehen wäre, um die zusammengedrehten Versorgungsleitung wieder zu "entwirren".

Durch die Verwendung von Versorgungsleitungen, welche direkt vom Generator durch das Stützrohr zur Netzeinspeisung führen, wären allerdings Leistungsverluste beseitigt, welche bei der Verwendung von Schleifkontakten und Schleifringen stets auftreten. Weiter würden auch keinerlei Wartungsarbeiten an solchen Schleifringe und Schleifkontakten anfallen.

Um jedoch zu verhindern, dass bei mehrfacher Drehung des Windkraftgenerators die direkt vom Generator zur Netzeinspeisung führenden Versorgungsleitungen Schaden nehmen können und auch um eine sonstige Wartung durch Zurückdrehen des Windkraftgenerators zu vermeiden, muss für eine solche Vorrichtung zur drehenden Lagerung des Windkraftgenerators eine Drehbegrenzung vorgesehen werden. Dabei tritt allerdings wiederum der Nachteil auf, dass beim Vorsehen einer Drehsperre beispielsweise in Form von Anschlägen eine vollständige Drehung des Windkraftgenerators um 360° nicht möglich ist. Damit kann sich aber der Windkraftgenerator nicht in jede beliebige Windrichtung ausrichten, so dass eine optimale Ausnutzung der Luftströmung nicht für jeden Betriebsfall sicher gewährleistet ist.

Demgemäß liegt der Erfindung die Aufgabe zugrunde, eine Vorrichtung zur drehbaren Lagerung eines Windkraftgenerators derart auszugestalten, dass eine direkte Leitungsführung vom Generator zur Netzeinspeisung möglich ist, ohne dass einerseits die Versorgungsleitungen durch Verdrehungen Schaden nehmen können und andererseits der Windkraftgenerator um zumindest 360° in jede Drehrichtung drehbar bleibt.

Die Aufgabe wird erfindungsgemäß zusammen mit den Merkmalen des Oberbegriffes des Anspruches 1 dadurch gelöst, dass der Windkraftgenerator mit einem Sperrglied gekoppelt ist, welches sich während der Drehbewegung des Windkraftgenerators auf einer Kreisbahn bewegt und, dass die Stützvorrichtung mit einem Anschlagelement gekoppelt ist, das im Bereich der Kreisbahn des Sperrgliedes angeordnet ist und als Drehbegrenzung für das Sperrglied dient und, dass das Anschlagelement und/oder das Sperrglied derart nachgiebig mit dem Windkraftgenerator einerseits oder der Stützvorrichtung andererseits gekoppelt ist bzw. sind, dass der Windkraftgenerator aus einer Mittelstellung um wenigstens 180° in beide möglichen Drehrichtungen drehbar ist.

Durch diese Ausgestaltung wird einerseits die mögliche Drehbewegung des Windkraftgenerators begrenzt, so dass ein Verwickeln oder eine Beschädigung der Versorgungsleitungen nicht auftreten kann. Aufgrund der nachgiebigen Ausgestaltung des Anschlagelementes oder auch des Sperrgliedes oder auch beider zusammen, bleibt jedoch eine Drehung des Windkraftgenerators aus einer Mittelstellung in jede der möglichen Drehrichtungen um jeweils wenigstens 180° und somit von insgesamt um wenigstens 360° aus einer Endstellung in eine zweite Endstellung weiter erhalten, so dass dieser sich stets optimal auf die gerade vorherrschende Windrichtung ausrichten kann. Die Nachgiebigkeit des Anschlagelementes oder des Sperrgliedes kann dabei beispielsweise durch eine begrenzt federelastisch oder begrenzt reibschlüssig nachgiebige Verbindung des Anschlagelementes mit der Stützvorrichtung bzw. des Sperrgliedes mit dem Windkraftgenerator realisiert sein. In beiden Fällen wird eine Art Dämpfung vor Erreichen des maximal möglichen Drehwinkels erreicht, so dass ein hartes Anschlagen und somit eine mögliche Beschädigung des Anschlagelementes und es Sperrgliedes oder auch der gesamten Lagerung des Windkraftgenerators vermieden wird.

Im Regelfall wird vor dem Aufbau des Windkraftgenerators auf einem Masten zunächst die Hauptwindrichtung festgelegt, welche in der Regel aus Erfahrungswerten in Bezug auf den Aufstellungsort bekannt ist. Danach ist der Windkraftgenerator in einer Mittelstellung, welche der Ausrichtung auf diese Hauptwindrichtung entspricht derart auszurichten, dass eine symmetrische Drehung in beide Drehrichtungen um den Drehwinkel ermöglicht wird. Damit ist der Windgenerator auf Grund der erfindungsgemäßen Lagerung in beide Drehrichtung derart drehbar, dass er sich auch auf eine entgegen der Hauptwindrichtung einstellende Luftströmung ausrichtet. Sind dabei das Anschlagelement und/oder das Sperrglied federelastisch ausgebildet, so wird im Drehwinkelbereich der einen oder anderen Endstellung des Windkraftgenerators ein Rückstellmoment bewirkt, so dass der Windkraftgenerator tendenziell stets wieder in Richtung seiner Mittelstellung strebt und sich beispielsweise bei Windstille wieder dieser Mittelstellung annähert.

Weitere vorteilhafte Ausgestaltungen sind den Unteransprüchen 2 bis 13 entnehmbar.

So kann gemäß Anspruch 2 vorgesehen sein, dass das Sperrglied als Teil einer Sperrscheibe ausgebildet ist, welche an einer Drehwelle angeordnet ist, auf welcher der Windkraftgenerator mit seinem Generator drehfest befestigt ist. Durch diese Sperrscheibe ist das Sperrglied in einfacher Weise mit der Drehwelle des Windkraftgenerators koppelbar, wobei das Sperrglied selbst an die jeweils vorliegenden Einsatzbedingungen anpassbar ist.

Gemäß Anspruch 3 kann vorgesehen sein, dass die Drehwelle als Hohlwelle ausgebildet ist und, dass zur Verbindung der Sperrscheibe mit der Drehwelle ein Kupplungsstift vorgesehen ist, welcher die Sperrscheibe zusammen mit der Drehwelle quer zur Drehwelle verlaufend durchragt und, dass die Drehwelle zur Aufnahme des Kupplungsstiftes zwei sich diametral gegenüberliegende Stellschlitze aufweist, welche eine relative, begrenzte Drehbewegung der Sperrscheibe auf der Drehwelle ermöglichen. Durch diese Ausgestaltung wird eine äußerst einfache Drehbegrenzung der Sperrscheibe gegenüber der Drehwelle des Windkraftgenerators realisiert, wobei die Sperrscheibe über die Kopplung mit den Stellschlitzen der Drehwelle begrenzt zur Drehwelle drehbar ist. Damit sind sichergestellt, dass der Windkraftgenerator zumindest über 360° aus seiner ersten Anfangslage in seine zweite Endlage oder aus seiner Mittelstellung in beide Drehrichtungen um jeweils 180° drehbar bleibt. Die Größe des gesamten Drehwinkelbereichs ist durch die Umfangslänge der Stellschlitze in der Drehwelle vorwählbar, so dass auch größere Drehwinkelbereiche über 360° von Anfangslage zur Endlage einstellbar sind.

Gemäß Anspruch 4 kann vorgesehen sein, dass die Stellschlitze V-förmig ausgebildet sind und, dass der Kupplungsstift durch eine auf die Sperrscheibe wirkende Axialdruckfeder in der V-Spitze der Stellschlitze nachgiebig gehalten ist. Durch diese Ausgestaltung wird die Sperrscheibe nachdem diese mit ihrem Sperrglied gegen eine beispielsweise im Bereich eines Lagergehäuses feststehend angeordneten Anschlages läuft, relativ zur Drehwelle gegen die Federkraft der Axialdruckfeder axial ausgelenkt, so dass ein gewisses Rückstellmoment durch Zusammenwirken des Kupplungsstiftes und der V-förmigen Stellschlitze bewirkt wird. Durch dieses Rückstellmoment wird sicher verhindert, dass der Windkraftgenerator in unerwünschter Weise in seiner Anfangslage oder seiner Endlage verharrt, sondern stets dazu tendiert, sich in Richtung seiner Mittelstellung zurückzudrehen.

Gemäß Anspruch 5 kann demgemäß vorgesehen sein, dass die Stützvorrichtung ein separates Lagergehäuse aufweist, in welcher die Drehwelle drehbar gelagert ist und welches drehfest mit einer Stütze des Windkraftgenerators verbunden ist und, dass das Anschlagelement als Anschlagzapfen ausgebildet ist, welcher das Lagergehäuse zur Sperrscheibe hin axial überragt. Durch diese Ausgestaltung wird eine äußerst kompakte Bauweise der erfindungsgemäßen Vorrichtung erreicht.

Gemäß Anspruch 6 kann weiter vorgesehen sein, dass die Sperrscheibe axial unterhalb des Lagergehäuses auf der Drehwelle angeordnet ist und axial aus einer unteren Ausgangslage begrenzt vertikal nach oben entgegen der Federkraft der Axialdruckfeder zum Lagergehäuse hin verstellbar ist. Durch diese Ausgestaltung ist die Sperrscheibe mit ihrem Sperrglied sicher mit dem Anschlagelement der Lagergehäuses in Eingriff bringbar.

Eine absolut sicherer Funktionsablauf wird durch die Ausgestaltung gemäß Anspruch 7 erreicht, wonach vorgesehen ist, dass die Axialbewegung der Sperrscheibe durch den Kupplungsstift bewirkt wird, welcher bei einer relativen Drehbewegung der Sperrscheibe zur Drehwelle entlang der V-förmigen Stellschlitze axial nach oben ausgelenkt wird. Durch den Kupplungsstift sind insbesondere auch im Endbereich der maximal möglichen Drehbewegung äußerst hohe "Bremskräfte" aufnehmbar, so dass eine Beschädigung der erfindungsgemäßen Vorrichtung auch bei größeren Windstärken sicher ausgeschlossen ist. Durch diese Ausgestaltung wird somit eine hinreichende Dämpfungswirkung der Drehbewegung erreicht.

Gemäß Anspruch 8 kann vorgesehen sein, dass die relative Stellbewegung der Sperrscheibe sowohl in axialer Richtung als auch in Umfangsrichtung gegenüber der Drehwelle durch den mit den Stellschlitzen in Eingriff stehenden Kupplungszapfen begrenzt ist. Insbesondere durch die axiale Begrenzung der Stellbewegung ist das gewünschte Rückstellmoment und auch die Dämpfungswirkung durch eine entsprechende Anpassung der Stärke der Axialdruckfeder und/oder durch den Verlauf der Steigung der V-förmigen Stellschlitze begrenzt einstellbar.

Gemäß Anspruch 9 kann weiter vorgesehen sein, dass das Lagergehäuse etwa zylindrisch ausgebildet ist und einen radial erweiterten Montageflansch aufweist, mit welchem das Lagergehäuse oberseitig an einem Stützmasten befestigbar ist und an welchem sich die Axialdruckfeder axial abstützt. Durch diese Ausgestaltung wird eine äußerst kompakte und raumsparende Bauweise erreicht.

In gleicher Weise vorteilhaft ist auch die Ausgestaltung gemäß Anspruch 10, wonach die im Lagergehäuse angeordnete Drehwelle zusammen mit der an ihrem unteren Aufnahmeabschnitt aufgenommenen Sperrscheibe sowie der Axialdruckfeder innerhalb des Stützmasten angeordnet ist. Durch diese Ausgestaltung ist die "Sperrvorrichtung" durch äußere Einflüsse im Betrieb geschützt.

Durch die Ausgestaltung gemäß Anspruch 11 wird eine äußerst einfache Abstützung der Drehwelle am Lagergehäuse und damit auf dem Stützmasten erreicht. Danach ist vorgesehen, dass die Drehwelle einen radial erweiterten Lagersitz bildet, mit welchem die Drehwelle sich axial an einem auf das Lagergehäuse aufgesetzten Lagerring abstützt.

Weiter kann gemäß Anspruch 12 vorgesehen sein, dass zwischen dem Lagerring und dem Lagergehäuse ein Axialdrucklager vorgesehen ist, über welches sich der Lagerring zusammen mit der aufgenommenen Drehwelle axial am Lagergehäuse abstützt. Durch das vorgesehen Axialdrucklager ist der Windkraftgenerator äußerst leicht gegenüber dem Lagergehäuse drehbar, so dass eine sichere Ausrichtung des Windkraftgenerators auf die momentane Windrichtung gewährleistet ist.

Für die drehende Lagerung bzw. die radiale Führung der Drehwelle ist gemäß Anspruch 13 vorgesehen, dass zwei axial hintereinander liegende Lagerbuchsen im Lagergehäuse vorgesehen sind.

Weiter kann gemäß Anspruch 14 vorgesehen sein, dass die im Lagergehäuse angeordnete Drehwelle zusammen mit der an ihrem unteren Aufnahmeabschnitt aufgenommenen Sperrscheibe sowie der Axialdruckfeder von einem am Lagergehäuse montierten Schutzgehäuse umgeben ist. Durch dieses Schutzgehäuse wird das Lagergehäuse zusammen mit der erfindungsgemäßen "Sperrvorrichtung" insbesondere bei der Montage oder dem Transport des Windkraftgenerators zusammen mit der gesamten Lagerung gegen Beschädigung geschützt. Außerdem kann das Schutzgehäuse zur Aufnahme von Schmiermitteln dienen, so dass der Verschließ der "Sperrvorrichtung" erheblich reduziert wird.

Gemäß Anspruch 15 kann des Weiteren vorgesehen sein, dass das Schutzgehäuse ein Kontaktelement in Form eines Steckkontaktes aufweist. Durch diese Ausgestaltung ist eine äußerst einfache elektrische Kopplung des Windkraftgenerators beim Aufbau der gesamten Windkraftanlage sichergestellt.

Anhand der Zeichnung wird nachfolgend ein Ausführungsbeispiel der erfindungsgemäßen Vorrichtung im Zusammenhang mit einem ummantelten Windkraftgenerator beispielhaft näher erläutert. Es zeigt:
- Fig. 1: einen Windkraftgenerator zusammen mit einer erfindungsgemäßen Vorrichtung zur drehbaren Lagerung des Windkraftgenerators im vertikalen Längsschnitt;
- Fig. 2: eine perspektivische Explosionsdarstellung der Lager- und Montageelemente der erfindungsgemäßen Vorrichtung;
- Fig. 3: eine perspektivische Explosionsdarstellung einer Drehwelle zur drehenden Lagerung des Windkraftgenerators aus Fig. 1 zusammen mit einer Sperrscheibe und einem Kupplungsstift;
- Fig. 4: die Sperrscheibe aus Fig. 3 sowie den Kupplungsstift aus Fig. 3 in ihrem, im unteren Endbereich der Drehwelle montierten Zustand in einer neutralen Mittelstellung in perspektivischer Darstellung;
- Fig. 5: die Bauelemente aus den Fig. 2 und 3 in ihrem montierten Zustand in einem perspektivischen Teilschnitt;

- Fig. 6: einen Vertikalschnitt durch die montierten Bauteile der erfindungsgemäßen Vorrichtung aus den Fig. 2 und 3 zusammen mit dem unteren Teil der Windkraftturbine aus Fig. 1 sowie einem zusätzlich vorgesehen Schutzgehäuse mit einem Kontaktelement.

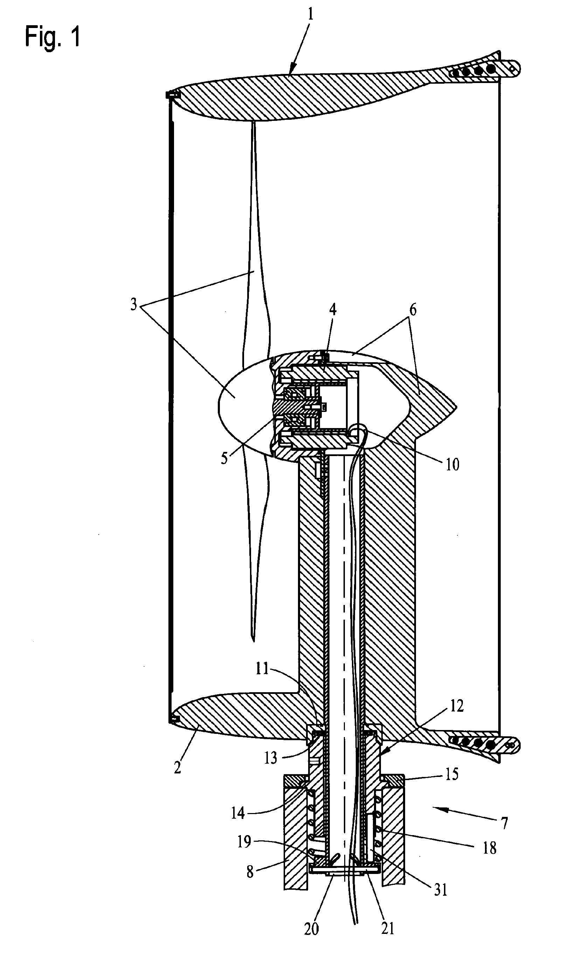

Fig. 1 zeigt einen Vertikalschnitt durch einen Windkraftgenerator 1, welcher beim vorliegenden Ausführungsbeispiel ein Mantelgehäuse 2, einen Rotor 3 sowie einen Generator 4 aufweist. Dieser Generator 4 wird durch den Rotor 3 über eine entsprechende Kupplungswelle 5 rotierend angetrieben. Weiter weist der Generator 4 ein mehrteiliges Generatorgehäuse 6 auf, über welches der Rotor 3 zusammen mit dem Generator 4 drehbar über eine Vorrichtung 7 an einem Stützmast 8 gelagert ist. Zur vertikalen Abstützung des Mantelgehäuses 2 sowie des Generators 4 ist beim vorliegenden Ausführungsbeispiel eine als Hohlwelle ausgebildete Drehwelle 9 vorgesehen.

Durch diese Drehwelle 9 sind Versorgungsleitungen 10 ausgehend vom Generator 4 hindurch geführt und verbinden den Generator 4 mit einer in der Zeichnung nicht näher dargestellten Netzversorgungseinheit, über welche die elektrische Energie des Generators 4 zur Einspeisung in das allgemeine Versorgungsnetz entsprechend den herrschenden Anforderungen moduliert wird.

Es ist erkennbar, dass beim vorliegenden Ausführungsbeispiel die Drehwelle 9 über einen Lagerring 11 drehbar auf einem Lagergehäuse 12 vertikal abgestützt ist. Die Drehwelle 9 sowie der Lagerring 11 stehen dabei drehfest mit dem Mantelgehäuse 2 bzw. dem Generatorgehäuse 6 des Generators 4 in Verbindung. Zwischen dem Lagerring 11 und dem Lagergehäuse 12 ist ein Axialdrucklager 13 vorgesehen. Hierzu wird auch auf die Zeichnungsfigur 6 verwiesen, in welcher der Bereich der Vorrichtung 7 vergrößert dargestellt ist, wie weiter unten noch näher beschrieben wird.

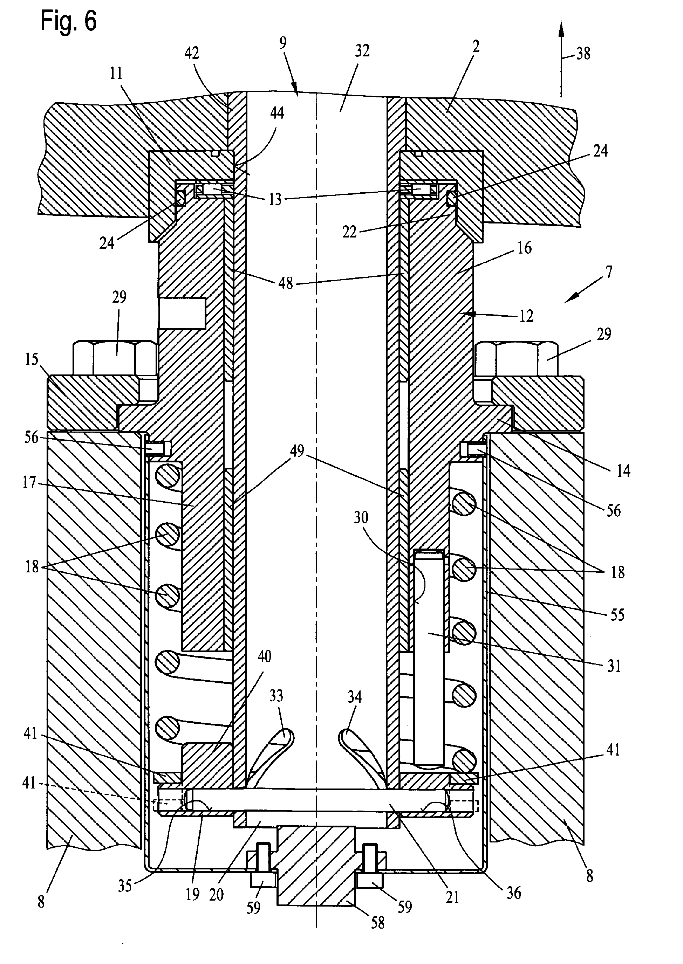

Weiter ist aus Fig. 1 und 6 erkennbar, dass das Lagergehäuse 12 etwa im Bereich seines oberen Drittels einen radial vorstehenden, umlaufenden Montageflansch 14 aufweist, mit welchem das Lagergehäuse 12 oberseitig auf den Stützmasten 8 aufsetzbar ist. Zur feststehenden Montage des Lagergehäuses 12 mit seinem Montageflansch 14 auf den Stützmasten 8 ist beim vorliegenden Ausführungsbeispiel ein Montagering 15 vorgesehen, welcher einerseits mit dem Stützmasten 8 verschraubbar ist und andererseits den Montageflansch 14 feststehend gegen den Stützmasten 8 drückt.

Desweiteren ist aus Fig. 6 ersichtlich, dass das Lagergehäuse 12 zum Mantelgehäuse 2 hin zur axialen Abstützung und Lagerung des Lagerringes 11 einen Stützzylinder 16 bildet. Diesem Stützzylinder 16 axial gegenüberliegend bildet das Lagergehäuse 12 einen radial verjüngt ausgebildeten Führungszylinder 17, welcher in den Stützmasten 8 hineinragt. Auf diesem Führungszylinder 17 ist eine Axialdruckfeder 18 angeordnet, welche axial gegen eine Sperrscheibe 19 drückt. Dabei bildet die Drehwelle 9 einen axial nach unten aus dem Führungszylinder 17 des Lagergehäuses 12 vorstehenden Aufnahmeabschnitt 20, auf welchem die Sperrscheibe 19 über einen Kupplungsstift 21 begrenzt axial verstellbar und begrenzt verdrehbar gelagert ist.

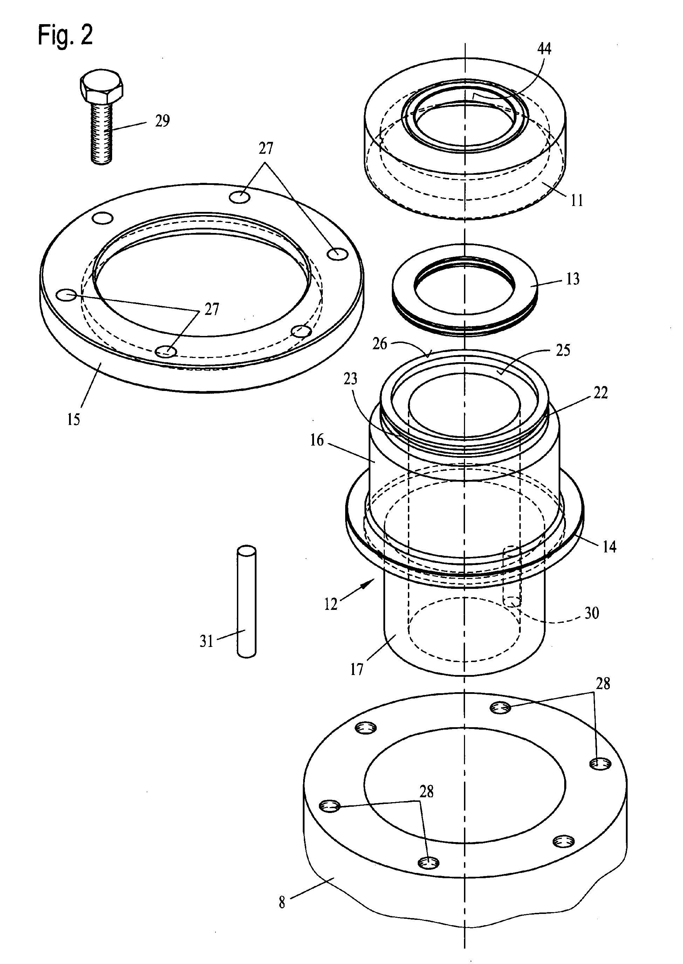

Zur detaillierteren Ausgestaltung der einzelnen Bauteile der Vorrichtung 7 zeigt Fig. 2 das obere Ende des Stützmasten 8, den Lagerring 11, das Lagergehäuse 12, das Axialdrucklager 13 sowie den Montagering 15 in perspektivischer Explosionsdarstellung.

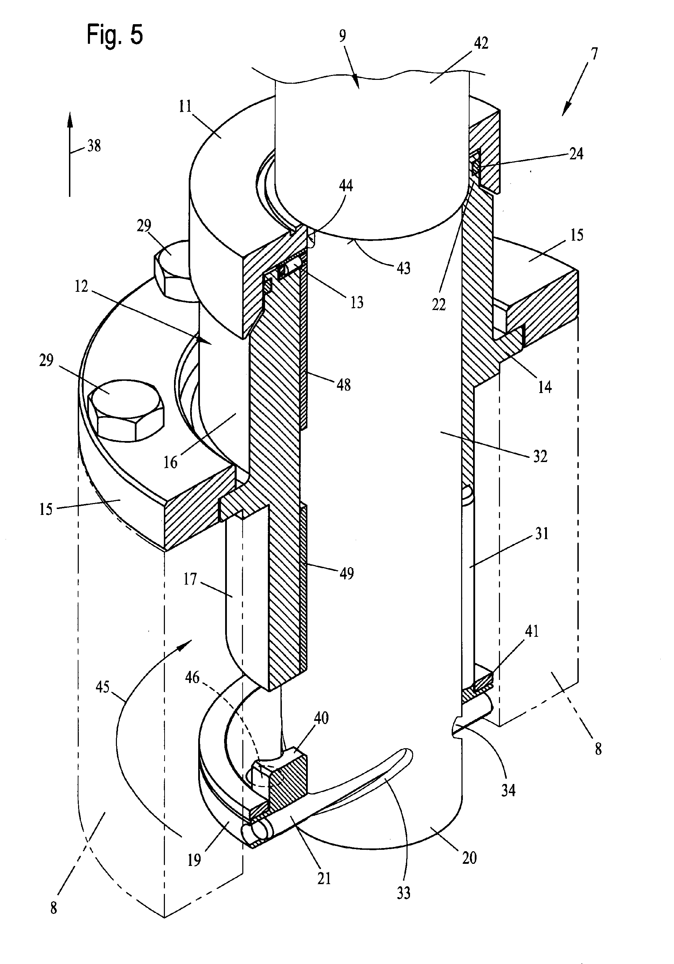

Aus Fig. 2 ist dabei der axial vorstehende Montageflansch 14 des Lagergehäuses 12 sowie der nach oben gerichtete Stützzylinder 16 und auch der nach unten gerichtete Führungszylinder 17 erkennbar. Im oberen Endbereich bildet der Stützzylinder 16 einen radial verjüngten Aufnahmeabschnitt 22, welcher eine umlaufende Aufnahmenut 23 aufweist, die zur Aufnahme eines Dichtungsringes 24 dient, wie dies aus den Fig. 5 und 6 ersichtlich ist.

Desweiteren ist aus Fig. 2 erkennbar, dass der Aufnahmeabschnitt 22 oberseitig zur Aufnahme des Axialdrucklagers 13 eine umlaufende Einsenkung 25 aufweist. In diese Einsenkung 25 ist das Axialdrucklager 13 passend einsetzbar und überragt die obere Stirnfläche 26 des Aufnahmeabschnittes 22 axial nach oben hin geringfügig, so dass der auf das Axialdrucklager 13 aufgesetzte Lagerring 11 im montierten Zustand nicht mit der oberen Stirnfläche 26 des Aufnahmeabschnittes 22 in Berührung kommt. D.h., dass der Lagerring 11 über das Axialdrucklager 13 drehbar am Lagergehäuse 12 gelagert ist.

Weiter ist aus Fig. 2 erkennbar, dass der Montagering 15 mehrere Durchgangsbohrungen 27 aufweist, mit welchen der Montagering 15 auf entsprechende Montagegewinde 28 des Stützmasten 8 ausrichtbar ist. Zur feststehenden Montage des Montageringes 15 auf den Stützmasten 8 sind entsprechende Montageschrauben 29 in entsprechender Anzahl vorgesehen, von welchen in der Zeichnung lediglich ein Exemplar beispielhaft dargestellt ist.

Desweiteren ist aus Fig. 2 erkennbar, dass der Führungszylinder 17 des Lagergehäuses 12 eine nach unten offene Aufnahmebohrung 30 aufweist, in welche ein Anschlagzapfen 31 einpressbar ist, dessen montierter Zustand beispielhaft in Fig. 1, 5 und 6 dargestellt ist.

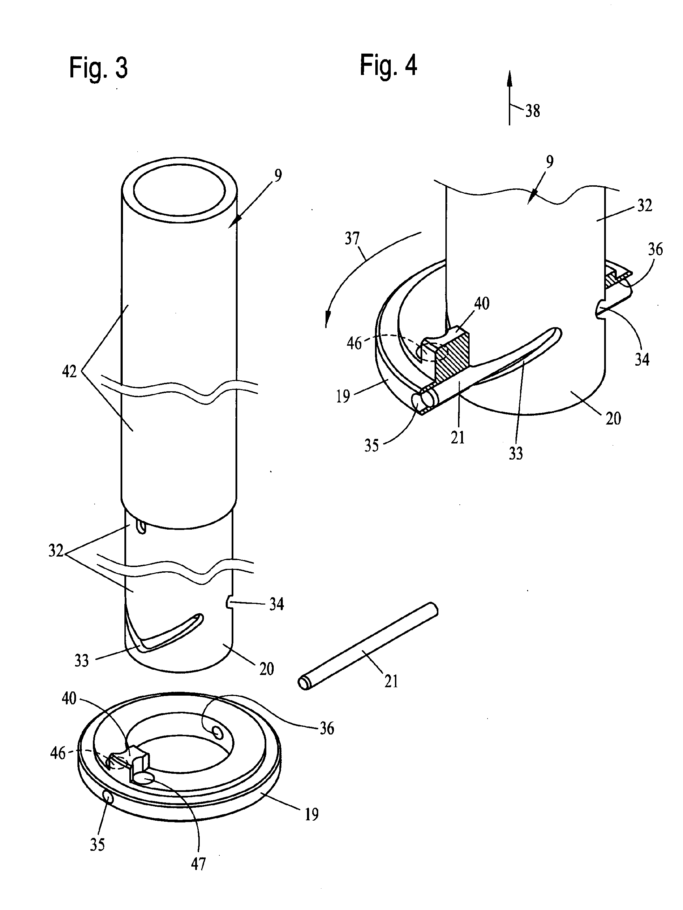

Fig. 3 zeigt eine perspektivische, verkürzte Darstellung der Drehwelle 9. Es ist erkennbar, dass die Drehwelle 9 abgesetzt ausgebildet ist und in ihrem unteren Endbereich einen radial verjüngten Lagerabschnitt 32 aufweist, dessen unteres Ende den Aufnahmeabschnitt 20 für die Sperrscheibe 19 bildet, welche in Fig. 3 ebenfalls in perspektivischer Darstellung gezeigt ist.

In diesem unteren Aufnahmeabschnitt 20 weist die Drehwelle 9 zwei sich diametral gegenüberliegende, V-förmige Stellschlitze 33 und 34 auf. Durch diese Stellschlitze 33, 34 ist der Kupplungsstift 21 quer zur Drehwelle 9 verlaufend hindurch steckbar.

Dieser Kupplungsstift 21 dient zur begrenzt drehbaren und begrenzt axial verstellbaren Lagerung der Sperrscheibe 19 im Bereich des Aufnahmeabschnittes 20 an der Drehwelle 9. Dazu ist der Kupplungsstift 21 in zwei entsprechend radial verlaufende und zueinander fluchtende Durchgangsbohrungen 35 und 36 der Sperrscheibe 19 einsteckbar und kann dort beispielsweise durch eine Pressverbindung oder auch eine Schraubverbindung gesichert sein. Diese im Bereich des Aufnahmeabschnittes 20 des Lagerabschnittes 32 der Drehwelle 9 montierte Position der Sperrscheibe 19 zeigt Fig. 4 in perspektivischer Darstellung.

Es ist erkennbar, dass der Kupplungsstift 21 sowohl die beiden Durchgangsbohrungen 35 und 36 als auch die beiden Stellschlitze 33 und 34 quer zur Drehwelle 9 verlaufend durchragt. Über die Stellschlitze 33 und 34 ist die Sperrscheibe 19 begrenzt relativ zur Drehwelle 9 drehbar, wobei sie gleichzeitig durch den Kupplungsstift 21 bei einer Relativbewegung zur Drehwelle 9 beispielsweise in Richtung des Pfeiles 37 - oder auch in entgegengesetzter Richtung des Pfeiles 37 - axial verstellt wird. Für diese Axialverstellung weisen die beiden Stellschlitze 33 und 34 eine entsprechende V-förmige Ausgestaltung auf. In Fig. 4 ist dabei eine Mittelstellung der Sperrscheibe 19 relativ zur Drehwelle 9 dargestellt, in welcher der Kupplungsstift 21 in den unteren Bereichen der Spitze der beiden Stellschlitze 33 und 34 angeordnet ist, wie dies in Fig. 4 für den Stellschlitz 33 erkennbar ist.

Es ist leicht vorstellbar, dass bei einer Relativdrehung der Sperrscheibe 19 in Richtung des Pfeiles 37 oder in entgegengesetzter Richtung zum Pfeil 37 relativ zur Drehwelle 9 der Kupplungsstift 21 entlang der Stellschlitze 33 und 34 bewegt wird und somit eine Auslenkung der Sperrscheibe 19 in Richtung des Pfeiles 38 nach oben erfolgt. Die Sperrscheibe 19 bildet ein vertikal nach oben gerichtetes Sperrglied 40, welches als nachgiebiges Anschlagelement für den Windkraftgenerator 1 aus Fig. 1 dient. Dabei wirkt dieses Sperrglied 40 mit dem Anschlagzapfen 31 aus Fig. 2 zusammen, welches als Anschlagelement der Vorrichtung für die drehbare Lagerung des Windkraftgenerators 1 aus Fig. 1 dient.

Fig. 5 zeigt einen perspektivischen Vertikalschnitt der erfindungsgemäßen Vorrichtung 7 im montierten Zustand. Die in Fig. 5 dargestellt Drehwinkellage der Drehwelle 9 zusammen mit der sich in ihrer Ausgangslage befindlichen Sperrscheibe 19 stellt hier eine Mittelstellung dar, aus welcher die Drehwelle 9 einerseits in Richtung des Pfeiles 45 und andererseits auch in entgegengesetzter Richtung des Pfeiles 45 um jeweils wenigstens 180° drehbar ist. Beim Aufbau eine Windkraftgenerators 1, wie dieser in Fig. 1 beispielhaft dargestellt ist entspricht diese Mittelstellung auch der Mittelstellung des Windkraftgenerators 1 und der Hauptwindrichtung.

Es ist erkennbar, dass die Drehwelle 9 mit ihrem Lagerabschnitt 32 in das Lagergehäuse 12 hineinragt und dieses mit seinem unteren Ende 20 mit seinen Stellschlitzen 33 und 34 axial nach unten überragt. Der Kupplungsstift 31 ist in die Aufnahmebohrung 30 (Fig. 6) festsitzend eingesetzt und endet oberhalb der auf dem unteren Ende 20 der Drehwelle 9 sitzenden Sperrscheibe 19, wie dies beispielsweise aus Fig. 6 erkennbar ist. Auf die Sperrscheibe 19 ist beim vorliegenden Ausführungsbeispiel eine umlaufende Lagerscheibe 41 aufgesetzt, welche zur drehbaren Abstützung in axialer Richtung der Axialdruckfeder 18 aus Fig. 1 dient, wie diese ebenfalls aus Fig. 6 erkennbar ist. Diese Axialdruckfeder 18 ist aus Übersichtlichkeitsgründen in Fig. 5 nicht dargestellt.

Das Lagergehäuse 12 ist mit seinem radial vorstehenden Montageflansch 14 oberseitig auf den Stützmasten 8 aufgesetzt und in dieser Position über den Montagering 15 fixiert. Hierzu sind in Fig. 5 zwei der zugehörigen Montageschrauben 29 erkennbar.

Weiter ist aus Fig. 5 und 6 ersichtlich, dass zwischen dem oberen Stützzylinder 16 bzw. dessen oberem Aufnahmeabschnitt 22 und dem Lagerring 11 das Axialdrucklager 13 angeordnet ist. Die Drehwelle 9 bildet zwischen ihrem unteren Lagerabschnitt 32 und ihrem oberen Montageabschnitt 42 einen umlaufenden, radial erweiterten Lagersitz 43, mit welchem die Drehwelle 9 axial feststehend und definiert in einer entsprechenden Aufnahmebohrung 44 des Lagerringes 11 eingesetzt ist.

Durch die aus Fig. 6 ersichtliche Axialdruckfeder 18 wird die Sperrscheibe 19 entgegen des Pfeiles 38 vertikal nach unten gedrückt, so dass die in Fig. 5 dargestellte Mittelposition der Sperrscheibe 19 mit dem Kupplungsstift 21 in den Stellschlitzen 33 und 34 definiert aber nachgiebig fixiert ist. Wird nun die Sperrscheibe 19 zusammen mit der Drehwelle 9 in Richtung des Pfeiles 45 (oder in entgegengesetzter Richtung) bewegt, gelangt das Sperrglied 40 nach Ausführung einer entsprechenden Drehung mit dem vertikal nach unten vorstehenden, sich in der Kreisbahn des Sperrgliedes 40 befindenden Anschlagzapfen 31 in Eingriff. Bei weiterer Drehung in Richtung des Pfeiles 45 der Drehwelle 9 wird nun die Sperrscheibe 19 durch den Eingriff des Sperrgliedes 40 mit dem feststehenden Anschlagzapfen 31 an einem weiteren Mitdrehen gehindert, so dass der ebenfalls dann feststehende Kupplungsstift 21 entlang der beiden Stellschlitze 33 und 34 gleitet.

Dabei führt die Sperrscheibe 19 eine vertikale Stellbewegung in Richtung des Pfeiles 38 aus, wobei der Anschlagzapfen 31 während dieser Stellbewegung in eine im Bereich des Sperrgliedes 40 in der Sperrscheibe 19 angeordnete Durchgangsbohrung 46 eingeschoben wird.

Bei entsprechender Drehung in entgegengesetzter Richtung de Pfeiles 45 aus der in Fig. 5 dargestellten Mittelstellung der Drehwelle 9 gelangt das Sperrglied 40 in Umfangsrichtung auf der gegenüberliegenden, vorderen Seite mit dem Anschlagzapfen 31 in Eingriff, so dass auch dann die Drehbewegung der Sperrscheibe 19 gesperrt wird. Bei weiterer Drehung entgegen des Pfeiles 45 der Drehwelle 9 wird dann wiederum der Kupplungsstift 21 entlang der beiden Stellschlitze 33 und 34 bewegt, so dass wiederum eine Axialbewegung der Sperrscheibe 19 in Richtung des Pfeiles 38 axial nach oben bewirkt wird. Auf dieser zweiten Seite des Sperrgliedes 40 ist ebenfalls eine zweite Durchgangsbohrung 47 (Fig. 3) vorgesehen, in welche der Anschlagzapfen 31 während dieser vertikalen Stellbewegung der Sperrscheibe 19 eingeschoben wird.

Somit ist erkennbar, dass durch eine entsprechende Ausgestaltung der Umfangslänge der beiden Stellschlitze 33 und 34 die Drehwelle 9 nach Erreichen des Anschlages zwischen dem Sperrglied 40 und dem Anschlagzapfen 31 entsprechend weiter gedreht werden kann. Aufgrund der Einwirkung der Federkräfte der Axialdruckfeder 18 auf die Sperrscheibe 19 wird ein Rückstellmoment bewirkt, so dass die Drehwelle 9 bei Entlastung zwangsläufig wieder zurückgedreht wird. Da sich mit der Drehwelle 9 auch der gesamte Windkraftgenerator 1 aus Fig. 1 mitbewegt, gelangt dieser somit wiederum in eine frei drehbare Position, aus welcher er sich wiederum in eine möglichst günstige Windrichtung frei ausrichten kann.

Aus den Fig. 5 und 6 ist weiter erkennbar, dass zur drehbaren Lagerung des unteren Lagerabschnittes 32 der Drehwelle 9 im Lagergehäuse 12 zwei Lagerbuchsen 48 und 49 vorgesehen sind.

Weiter kann, wie dies in Fig. 6 beispielhaft dargestellt ist, ein Schutzgehäuse 55 vorgesehen sein, welche beispielsweise über zwei Kerbstifte 56 im Bereich des Montageflansches 14 am Lagergehäuse feststehend befestigt ist. Dieses Schutzgehäuse 55 umschließt dabei das Lagergehäuse 12 im Bereich seines unteren Führungszylinders 17 zusammen mit der aus der Axialdruckfeder 18 mit Lagerscheibe 41, dem Anschlagzapfen 31 sowie der Sperrscheibe 19, dem Kupplungsstift 21 und den beiden V-förmigen Stellschlitzen 33 und 34 bestehenden erfindungsgemäßen "Sperrvorrichtung". Durch dieses Schutzgehäuse 55 ist die "Sperrvorrichtung" einerseits beim Transport und bei der Montage gegen Beschädigung geschützt. Andererseits kann das Schutzgehäuse 15 auch zur Aufnahme von Schmiermitteln dienen, so dass dadurch insbesondere die "Sperrvorrichtung" äußerst verschleißarm und annähernd wartungsfrei betrieben werden kann.

Weiter kann das Schutzgehäuse 55 in seinem Bodenbereich mit einem beispielsweise als Steckkontakt ausgebildeten Kontaktelement 58 versehen sein, welches beispielsweise mit der Schutzgehäuse 55 über Montageschrauben 59 feststehend verschraubt ist. Dieses Kontaktelement dient oberseitig zum Anschluß der in Fig. 1 dargestellten Anschlußleitungen 10. Unterseitig bzw. außenseitig kann beispielsweise eine elektrische Steckverbindung vorgesehen sein, welche zum Anschluß von in der Zeichnung nicht näher dargestellten Zuführleitungen zur Netzeinspeisung der erzeugten elektrischen Energie dient. Durch diese Ausgestaltung wird insbesondere die Montage eines Windkraftgenerators mit der erfindungsgemäßen Lagerung und deren "Sperrvorrichtung" erheblich vereinfacht.

Durch die erfindungsgemäße Ausgestaltung der Vorrichtung 1 wird eine Vorrichtung zur drehbaren Lagerung des gesamten Windkraftgenerators 1 zur Verfügung gestellt, welche eine begrenzte Drehbewegung in beide Drehrichtungen von zumindest 360° erlaubt, wobei diese Drehbewegung durch die Sperrscheibe 19 mit ihrem Sperrglied 40 "nachgiebig" begrenzt ist. Somit ist aufgrund dieser besonderen Art der Lagerung des Windkraftgenerators 1 eine direkte Verkabelung des Generators 4 über die Versorgungsleitungen 10 mit einer entsprechenden Netzversorgungseinheit des Windkraftgenerators, welche feststehend auf dem Untergrund im Bereich des Stützmasten 8 angeordnet ist durchführbar, ohne dass einerseits eine Zerstörung der Versorgungsleitungen 10 zu befürchten ist und andererseits gewährleistet ist, dass der Windkraftgenerator 1 sich auf jede beliebige Windrichtung um wenigstens 360° drehen kann.

Weiter ist in Fig. 6 in gestrichelten Linien noch erkennbar, dass die Sperrscheibe 19 zur Aufnahme der Lagerscheibe 41 auch derart ausgestaltet sein kann, dass die Lagerscheibe 41 im axialen Bereich des Kupplungsstiftes 21 angeordnet ist. Durch diese Ausgestaltung wird der Kupplungsstift 21 in den beiden Durchgangsbohrungen 35 und 36 gesichert.

Beim vorliegenden Ausführungsbeispiel ist die Länge der V-förmigen Stellschlitze 33 und 34 in Verbindung mit den Abmessungen des Sperrgliedes 40 sowie des Anschlagzapfens 31 derart gewählt, dass eine Drehung des Windkraftgenerators 1 aus einer ersten Ausgangslage in seine zweite Endlage um wenigstens 400° ermöglicht wird. Durch die Axialdruckfeder 18 wird, wie bereits oben erwähnt, der Windkraftgenerator 1 über die Stellschlitze 33 und 34 zumindest teilweise zurückgestellt, so dass auch bei ungünstigen Bedingungen der Windkraftgenerator nicht in einer seiner Endstellungen verbleiben kann und sich selbständig wieder auf die vorherrschende Windrichtung einstellt.

## Patentansprüche

1. Vorrichtung zur drehbaren Lagerung eines Windkraftgenerators (1) einer Windkraftanlage, der einen mit Rotorblättern versehenen, durch einen Luftstrom um eine Rotorachse drehend antreibbaren Rotor (3) aufweist, durch welchen ein Generator (4) rotierend antreibbar ist, wobei der Windkraftgenerator (1) auf einer Stützvorrichtung (7) drehbar gelagert ist,
**dadurch gekennzeichnet,**
**dass** der Windkraftgenerator (1) mit einem Sperrglied (40) gekoppelt ist, welches sich während der Drehbewegung (Pfeile 37 und 45) des Windkraftgenerators (1) auf einer Kreisbahn bewegt und,
**dass** die Stützvorrichtung (7) mit einem Anschlagelement (31) gekoppelt ist, das im Bereich der Kreisbahn des Sperrgliedes (40) angeordnet ist und als Drehbegrenzung für das Sperrglied (40) dient und,
**dass** das Anschlagelement (31) und/oder das Sperrglied (40) derart nachgiebig mit dem Windkraftgenerator (1) einerseits oder der Stützvorrichtung (7) andererseits gekoppelt ist bzw. sind, dass der Windkraftgenerator aus einer Mittelstellung um wenigstens 180° in beide möglichen Drehrichtungen (Pfeile 37 oder 45) drehbar ist.

2. Vorrichtung nach Anspruch 1, **dadurch gekennzeichnet, dass** das Sperrglied (40) als Teil einer Sperrscheibe (19) ausgebildet ist, welche an einer Drehwelle (9) angeordnet ist, auf welcher der Windkraftgenerator (1) mit seinem Generator (4) drehfest befestigt ist.

3. Vorrichtung nach Anspruch 2, **dadurch gekennzeichnet, dass** die Drehwelle (9) als Hohlwelle ausgebildet ist und, dass zur Verbindung der Sperrscheibe (19) mit der Drehwelle (9) ein Kupplungsstift (21) vorgesehen ist, welcher die Sperrscheibe (19) zusammen mit der Drehwelle (9) quer zur Drehwelle (9) verlaufend durchragt und, dass die Drehwelle (9) zur Aufnahme des Kupplungsstiftes (21) zwei sich diametral gegenüberliegende Stellschlitze (33, 34) aufweist, welche eine relative, begrenzte Drehbewegung (Pfeil 37) der Sperrscheibe (19) auf der Drehwelle (9) ermöglichen.

4. Vorrichtung nach Anspruch 3, **dadurch gekennzeichnet, dass** die Stellschlitze (33, 34) V-förmig ausgebildet sind und, dass der Kupplungsstift (21) durch eine auf die Sperrscheibe (19) wirkende Axialdruckfeder (18) in der V-Spitze der Stellschlitze (33, 34) nachgiebig gehalten ist.

5. Vorrichtung nach einem der Ansprüche 1 bis 4, **dadurch gekennzeichnet, dass** die Stützvorrichtung (7) ein separates Lagergehäuse (12) aufweist, in welcher die Drehwelle (9) drehbar gelagert ist und welches drehfest mit einer Stütze (8) des Windkraftgenerators (1) verbunden ist und, dass das Anschlagelement (31) als Anschlagzapfen (31) ausgebildet ist, welcher das Lagergehäuse (12) zur Sperrscheibe (19) hin axial überragt.

6. Vorrichtung nach Anspruch 5, **dadurch gekennzeichnet, dass** die Sperrscheibe (19) axial unterhalb des Lagergehäuses (12) auf der Drehwelle (9) angeordnet ist und axial aus einer unteren Ausgangslage begrenzt vertikal nach oben entgegen der Federkraft der Axialdruckfeder (18) zum Lagergehäuse (12) hin verstellbar ist.

7. Vorrichtung nach Anspruch 6, **dadurch gekennzeichnet, dass** die Axialbewegung (Pfeil 38) der Sperrscheibe (19) durch den Kupplungsstift (21) bewirkt wird, welcher bei einer relativen Drehbewegung (in Richtung des Pfeiles 37 oder entgegen der Richtung des Pfeiles 37) der Sperrscheibe (19) zur Drehwelle (9) entlang der V-förmigen Stellschlitze (33, 34) axial nach oben ausgelenkt wird.

8. Vorrichtung nach Anspruch 7, **dadurch gekennzeichnet, dass** die relative Stellbewegung der Sperrscheibe (19) sowohl in axialer Richtung (Pfeil 38) als auch in Umfangsrichtung (in Richtung und entgegen des Pfeiles 37) gegenüber der Drehwelle (9) durch den mit den Stellschlitzen (33, 34) in Eingriff stehenden Kupplungszapfen (21) begrenzt ist.

9. Vorrichtung nach einem der Ansprüche 5 bis 8, **dadurch gekennzeichnet, dass** das Lagergehäuse (12) etwa zylindrisch ausgebildet ist und einen radial erweiterten Montageflansch (14) aufweist, mit welchem das Lagergehäuse (12) oberseitig an einem Stützmasten (8) befestigbar ist und an welchem sich die Axialdruckfeder (18) axial abstützt.

10. Vorrichtung nach Anspruch 9, **dadurch gekennzeichnet, dass** die im Lagergehäuse (12) angeordnete Drehwelle (9) zusammen mit der an ihrem unteren Aufnahmeabschnitt (20) aufgenommenen Sperrscheibe (19) sowie der Axialdruckfeder (18) innerhalb des Stützmasten (8) angeordnet ist.

11. Vorrichtung nach einem der Ansprüche 1 bis 10, **dadurch gekennzeichnet, dass** die Drehwelle (9) einen radial erweiterten Lagersitz (43) bildet, mit welchem die Drehwelle (9) sich axial an einem auf das Lagergehäuse (12) aufgesetzten Lagerring (11) abstützt.

12. Vorrichtung nach Anspruch 11, **dadurch gekennzeichnet, dass** zwischen dem Lagerring (11) und dem Lagergehäuse (12) eine Axialdrucklager (13) vorgesehen ist, über welches sich der Lagerring (11) zusammen mit der aufgenommenen Drehwelle (9) axial am Lagergehäuse (12) abstützt.

13. Vorrichtung nach einem der Ansprüche 5 bis 12, **dadurch gekennzeichnet, dass** zur radialen Führung und zur drehbaren Lagerung der Drehwelle (9) im Lagergehäuse (12) zwei axial hintereinander liegende Lagerbuchsen (48, 49) im Lagergehäuse (12) vorgesehen sind.

14. Vorrichtung nach einem der Ansprüche 10 bis 13, **dadurch gekennzeichnet, dass** die im Lagergehäuse (12) angeordnete Drehwelle (9) zusammen mit der an ihrem unteren Aufnahmeabschnitt (20) aufgenommenen Sperrscheibe (19) sowie der Axialdruckfeder (18) von einem am Lagergehäuse (12) montierten Schutzgehäuse (55) umgeben ist.

15. Vorrichtung nach Anspruch 14, **dadurch gekennzeichnet, dass** das Schutzgehäuse (55) ein Kontaktelement in Form eines Steckkontaktes (58) aufweist.
